# EUROPEAN PATENT SPECIFICATION

(11) **EP 2 930 764 B1**
(45) Date of publication and mention of the grant of the patent: **14.03.2018**
(21) Application number: 15162757.7
(22) Date of filing: 08.04.2015
(51) Int. Cl.: H01M 2/04, H01M 2/08, H01M 2/12, H01M 2/34

(54) **RECHARGEABLE BATTERY**
WIEDERAUFLADBARE BATTERIE
BATTERIE RECHARGEABLE

(30) Priority: 08.04.2014 KR 20140041969
(43) Date of publication of application: 14.10.2015
(73) Proprietor: Samsung SDI Co., Ltd., Yongin-si, Gyeonggi-do (KR)
(72) Inventor: Kim, Dae-Kyu, Gyeonggi-do (KR); Abe, Takao, Gyeonggi-do (KR)
(74) Representative: Mounteney, Simon James

(56) References cited:
- EP-A1- 2 104 160
- EP-A1- 2 696 429
- US-A1- 2009 186 269
- US-A1- 2013 004 834
- US-A1- 2014 045 009

## Description

### BACKGROUND

### 1. Field

The invention relates generally to a rechargeable battery having a current blocking unit.

### 2. Description of the Related Art

With advancement of technology and increasing demand for mobile devices, demand for rechargeable batteries as energy sources has been increasing.

For example, a cylindrical rechargeable battery includes an electrode assembly formed by disposing electrodes at opposite surfaces of a separator and winding the electrodes in a jelly roll form, a case accommodating the electrode assembly, and a cap assembly sealing an opening side of the case.

The cap assembly and an opening of the case interpose a gasket therebetween to be assembled by a crimping process.

That is, the case holds an external circumference of the cap assembly with a clamping portion connected to a beading portion depressed toward a diametrical center of the case from the opening side.

The cap assembly is electrically connected to the electrode assembly through a current interrupting device and a positive electrode lead tab.

For example, in the cap assembly, the current interrupting device includes a vent plate electrically connected to the cap plate forming a positive electrode terminal, a middle plate electrically connected to the vent plate, a vent protruding from the vent plate through a through-hole of the middle plate, and a sub-plate connected to the middle plate.

A positive electrode lead tab is connected to the sub-plate.

The vent plate and the middle plate interpose insulators therebetween to be combined to each other, thereby implementing an electrically insulating structure.

The insulator is interposed between an inner side surface of the middle plate bent once, and a surface of the vent plate bent twice.

Thus, a structure in which the vent plate and the middle plate are bent and the insulator is inserted therebetween increases a height of the current interrupting device including the vent plate, the insulator, the middle plate, and the sub-plate, thereby decreasing capacity of the electrode assembly inside the case.

In addition, since a fastening force is not sufficient due to simple insertion of the insulator, the vent plate and the middle plate may rotate with respect to each other in the cap assembly.

EP 2 696 429 A1 discloses a rechargeable battery known from the prior art.

The above information disclosed in this Background section is only for enhancement of understanding of the background of the described technology and therefore it may contain information that does not form the prior art that is already known in this country to a person of ordinary skill in the art.

### SUMMARY

One aspect of the present invention seeks to provide a rechargeable battery that can lower a height of a current interrupting device in a cap assembly.

Another aspect of the present invention provides a rechargeable battery that can prevent a vent plate and a middle plate from rotating with respect to each other in a cap assembly.

An embodiment of the invention provides a rechargeable battery including: an electrode assembly through which charging and discharging operations are performed; a case accommodating the electrode assembly and electrically connected to a first electrode of the electrode assembly; and a cap assembly combined to an opening of the case while interposing a gasket and being electrically connected to a second electrode of the electrode assembly. The cap assembly includes: a vent plate electrically connected to a cap plate; a middle plate separated from the vent plate, penetrated through a through-hole by a vent protruding from the vent plate, and electrically connected to the second electrode; an insulator interposed between the vent plate and the middle plate; and a sub-plate electrically connecting the vent with the middle plate. At least one of the vent plate and the middle plate is formed with protrusions and grooves facing the insulator such that the protrusions and the grooves are correspondingly combined to corresponding grooves and corresponding protrusions of the insulator, and in that the insulator includes a first polyethylene layer formed in the vent plate, a second polyethylene layer formed in the middle plate, and a poly(butylene terephthalate) fiber layer integrally formed between the first and second polyethylene layers.

The protrusions and the grooves of the insulator may be fusion-bonded to the corresponding grooves and the corresponding protrusions.

The vent plate may be provided with the pair of protrusions, and may be correspondingly provided with the grooves adjacent thereto.

The middle plate may be provided with the pair of protrusions, and may be correspondingly provided with the grooves adjacent thereto.

The protrusions and the grooves may include a first protrusion and a first groove that are formed in the vent plate, and a second protrusion and a second groove that are formed in the middle plate, wherein the first protrusion and the first groove may be symmetrical to the second protrusion and the second groove in a stacking direction while interposing the insulator therebetween.

The vent plate and the middle plate may be respectively provided with air discharging grooves on a surface facing the insulator.

The air discharging grooves may be formed in a diametrical direction of the insulator, and may be disposed to be separated from each other in a circumferential direction.

An angle formed between bottom surfaces of the first and second grooves of the vent and middle plates and one side surface of the first and second protrusions of the vent and middle plates connected thereto may be acute.

The first protrusion of the vent plate and the second protrusion of the middle plate may be respectively provided as a pair, and each groove bottom width set between bottom surfaces of the first and second grooves formed in the vent and middle plates may be greater than each groove opening width set between end portions of the first and second protrusions that are connected to the bottom surfaces to face each other.

The insulator may be formed with the first and second corresponding grooves as a pair that are correspondingly combined to the first protrusion and the second protrusion, and may be provided with the first and second corresponding protrusions that are correspondingly combined to the first and second grooves having the groove bottom width and the groove opening width.

The pair of first protrusions and the pair of second protrusions may be symmetrically formed based on center lines of the first and second grooves of the vent and middle plates, in a diametrical direction, an angle formed between one side surface of the first and second protrusions and bottom surfaces of the first and second grooves connected thereto may be acute, and an angle formed between the other side surface of the first and second protrusions and the other bottom surfaces of the first and second grooves connected thereto may be obtuse.

The insulator may be formed by at least one of first fusion-bonding to the first groove and the first protrusion of the vent plate at one side, and second fusion-bonding to the second groove and the second protrusion of the middle plate at the other side.

The cap assembly may further include a positive temperature coefficient (PTC) element interposed between the cap plate and the vent plate.

The middle plate may be connected to the second electrode through a lead tab.

The vent plate may interpose an insulating member with the cap plate such that an end portion of the vent plate is bent in a side opposite to the insulator to be electrically connected to a top surface of the cap plate.

The gasket continuously encloses the vent plate from below, above, and a lateral side thereof at an outer side of the insulator.

At least some of the above and other features of the invention are set out in the claims.

As described above, according to an embodiment of the invention, the vent and middle plates of the cap assembly are fusion-bonded by the insulator interposed therebetween, such that a height increase due to the bent vent plate is prevented and a height of the current interrupting device is decreased in the cap assembly.

In addition, the protrusions and the grooves facing the insulator are formed in at least one of the vent plate and the middle plate such that they are correspondingly combined to corresponding grooves and corresponding protrusions of the insulator, thereby preventing the vent plate and the middle plate from rotating with respect to each other.

### BRIEF DESCRIPTION OF THE DRAWINGS

FIG. 1 is a cross-sectional perspective view of a rechargeable battery according to a first embodiment of the present invention.
FIG. 2 is a cross-sectional perspective view of a cap assembly applicable to the rechargeable battery of FIG. 1.
FIG. 3 is a cross-sectional view of a current interrupting device applicable to FIG. 2.
FIG. 4 is a partial enlarged cross-sectional view of a connection structure in which a vent plate and a middle plate interposes an insulator therebetween.
FIG. 5 is an enlarged view of a portion combined with the insulator of FIG. 4.
FIG. 6 is an enlarged view of a portion of the vent plate of FIG. 5 combined with the insulator before and after it is deformed.
FIG. 7 is a bottom surface view of the vent plate of FIG. 3.
FIG. 8 is a partial cross-sectional perspective view of a rechargeable battery according to a second embodiment of the present invention.

### DETAILED DESCRIPTION

The present invention will be described more fully hereinafter with reference to the accompanying drawings, in which embodiments of the invention are shown.

As those skilled in the art would realize, the described embodiments may be modified in various different ways, all without departing from the scope of the present invention.

The drawings and description are to be regarded as illustrative in nature and not restrictive, and like reference numerals designate like elements throughout the specification.

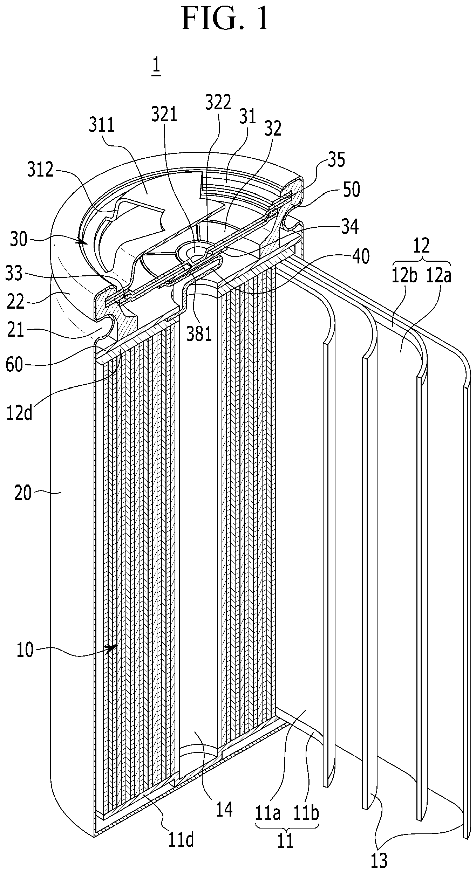

FIG. 1 is a cross-sectional perspective view of a rechargeable battery according to a first embodiment of the present invention.

Referring to FIG. 1, the rechargeable battery 1 according to a first embodiment of the invention includes: an electrode assembly 10 through which charging and discharging operations are performed; a case 20 accommodating the electrode assembly 10 and electrically connected to a first electrode 11 of the electrode assembly 10 (i.e., negative electrode); and a cap assembly 30 combined to an opening of the case 20 while interposing a gasket 50 therebetween and electrically connected to a second electrode 12 of the electrode assembly 10 (i.e., positive electrode).

For example, the electrode assembly 10 includes the negative electrode 11, a separator 13, and the positive electrode 12, which are sequentially layered to be disposed.

The electrode assembly 10 is formed by spirally winding the negative electrode 11, the positive electrode 12, and the separator 13, which is an insulator interposed therebetween, in a jelly roll state.

The electrode assembly 10 may be formed to have a cylindrical shape.

The cylindrical electrode assembly 10 is provided with a center pin 14 at a center thereof.

The center pin 14 is formed of a material having higher strength than the electrode assembly 10 to maintain the cylindrical shape of the electrode assembly 10.

The negative and positive electrodes 11 and 12 include coated regions 11a and 12a where an active material is coated on opposite surfaces of a current collector formed of a thin metal foil (i.e., aluminum or copper foil), and uncoated regions 11b and 12b where an active material is not coated thereon and thus are formed as exposed portions of current collectors.

In the jelly roll state, a negative electrode current collecting plate 11d is electrically connected to the uncoated regions 11b of the negative electrode 11 of the electrode assembly 10, and a positive electrode current collecting plate 12d is electrically connected to the uncoated regions 12b of the positive electrode 12 of the electrode assembly 10.

The case 20 is formed with an opening through which the electrode assembly 10 is inserted, and is formed in a cylindrical shape to accommodate the cylindrical electrode assembly 10.

The case 20 is connected to the negative electrode current collecting plate 11d by welding to function as a negative electrode terminal in the rechargeable battery 1, and may be formed of a conductive metal such as aluminum, an aluminum alloy, or a nickel-plated metal.

The cap assembly 30 is combined to the opening of the case 20 while interposing the gasket 50 therebetween to be electrically insulated from the case 20, and seals the case 20 in which the electrode assembly 10 and an electrolyte solution is placed.

The cap assembly 30 is electrically connected to the electrode assembly 10 through the current interrupting device and the positive electrode lead tab 40.

In this case, a positive electrode insulating plate 60 is interposed between the positive electrode current collecting plate 12d and the cap assembly 30 to insulate them. The positive electrode lead tab 40 connected to the positive electrode current collecting plate 12d penetrates the positive electrode insulating plate 60 toward the cap assembly 30.

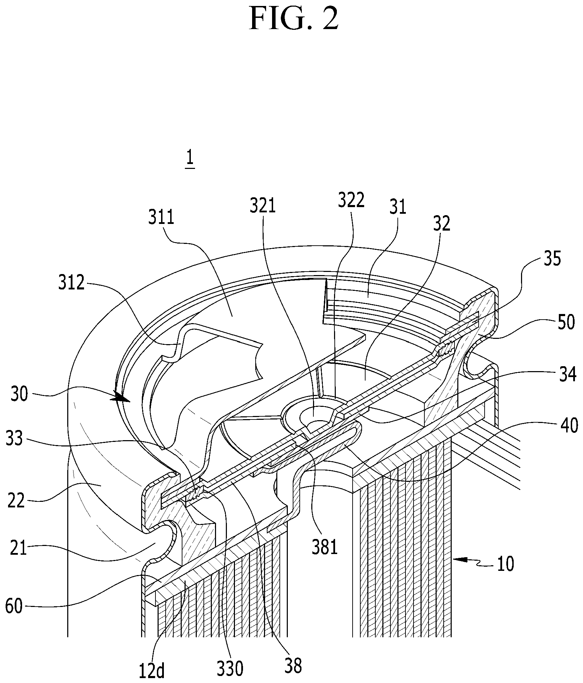

FIG. 2 is a cross-sectional perspective view of the cap assembly applicable to the rechargeable battery of FIG. 1.

Referring to FIGS. 1 and 2, the cap assembly 30 includes a cap plate 31, a positive temperature coefficient (PTC) element 35, a vent plate 32, an insulator 33, a middle plate 38, and a sub-plate 34, which are sequentially disposed toward an inner side of the case 20 from the outside.

The cap plate 31 is finally connected to the positive electrode lead tab 40 to function as a positive electrode terminal in the rechargeable battery 1, and is formed with a protruding portion 311 protruding out of the case 20 and an exhaust hole 312 that is opened toward a side of the protruding portion 311 to discharge internal gas.

Substantially, in the cap assembly 30, the current interrupting device is formed with the vent plate 32 and the sub-plate 34 that are electrically separated from each other by the insulator 33, and a connecting portion partially connecting the vent plate 32 and the sub-plate 34.

The connecting portion may be formed by welding the vent plate 32 and the sub-plate 34.

The vent plate 32 forming one side of the current interrupting device is installed at an inner side of the cap plate 31 to be electrically connected to the sub-plate 34 forming the other side of the current interrupting device.

In addition, the vent plate 32 is provided with a vent 321 at a center thereof to be welded to the sub-plate 34, and may be separated from the sub-plate 34 by internal pressure.

The vent 321 is ruptured at a predetermined pressure condition and discharges internal gas, and cuts off electrical connection with the sub-plate 34.

For example, the vent 321 protrudes toward inside of the case 20 from the vent plate 32.

The vent plate 32 is provided with a notch 322 that guides the rupture.

Thus, when the internal pressure of the case 20 increases due to gas generation, the notch 322 may be pre-ruptured and discharge the gas to the outside through the vent plate 32 and the exhaust hole 312, thereby preventing explosion of the rechargeable battery 1.

In this case, due to the rupture of the vent 321, the vent plate 32 is disconnected from the sub-plate 34.

Thus, the electrode assembly 10 and the cap plate 31 are electrically separated from each other by an operation of the current interrupting device.

The PTC element 35 is provided between the cap plate 31 and the vent plate 32 to control a current therebetween according to internal temperature of the rechargeable battery 1.

When the internal temperature exceeds a predetermined level, the PTC element 35 has electrical resistance that increases up to infinite.

Thus, the PTC element 35 may control a charging current or a discharging current between the cap plate 31 and the vent plate 32.

The sub-plate 34 faces the vent plate 32 and is electrically connected to the vent 321 and the middle plate 38.

The middle plate 38 is separated from the vent plate 32, and is combined to the vent plate 32 while interposing the insulator 33 therebetween.

In addition, the vent 321 protrudes through the insulator 33 and through-holes 330 and 381 of the middle plate 38 to be connected to the sub-plate 34.

Thus, the middle plate 38 is electrically connected to the vent 321 and the vent plate 32 through the sub-plate 34.

The middle plate 38 is connected to the positive electrode lead tab 40 by welding, and the positive electrode lead tab 40 penetrates through the positive electrode insulating plate 60 to be connected to the uncoated region 12b of the positive electrode 12 by welding.

As a result, the positive electrode lead tab 40 is electrically connected to the cap plate 31 via the middle plate 38, the sub-plate 34, the vent 321, the vent plate 32, and the PTC element 35.

The cap assembly 30 configured as described above is inserted into the opening of the case 20 while interposing the gasket 50 therebetween and is then fixed to the opening of the case 20 by a crimping process, thereby forming the rechargeable battery 1.

In this case, the case 20 is formed with a beading portion 21 depressed in a diametrical center of the case 20, and a clamping portion 22 configured to interpose the gasket 50 and to hold an external circumference of the assembly 30.

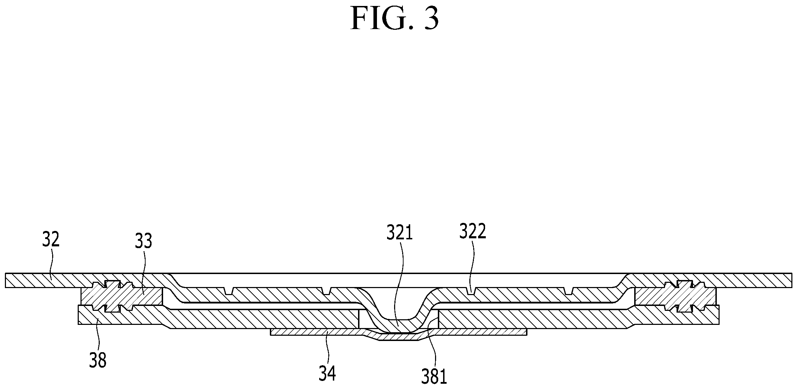

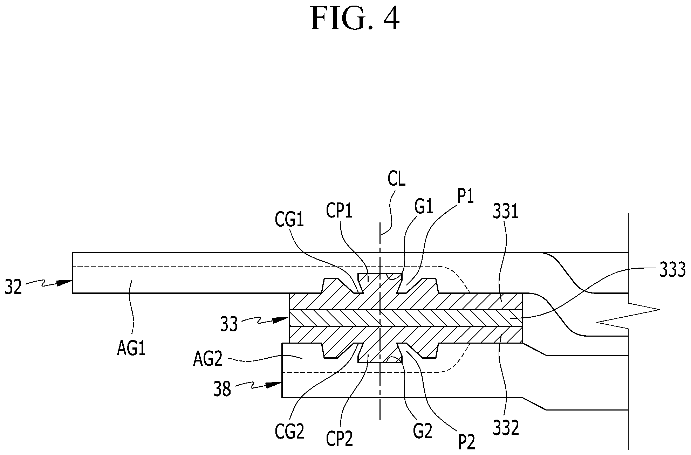

FIG. 3 is a cross-sectional view of a current interrupting device applicable to FIG. 2, and FIG. 4 is a partial enlarged cross-sectional view of a connection structure in which a vent plate and a middle plate interpose an insulator therebetween.

Referring to FIGS. 3 and 4, the vent plate 32 and the middle plate 38 are formed with protrusions and grooves in a direction toward the insulator 33. The protrusions and grooves are combined to corresponding grooves and corresponding protrusions that are formed to correspond to those of the insulator 33.

In this case, the corresponding protrusions and grooves of the insulator 33 may be fusion-bonded to the protrusions and the grooves. The fusion-bonding means a method for bonding materials together by heat and pressure. For example, when the heated insulator 33 is pressed into the vent plate 32 and the middle plate 38, the corresponding grooves and the corresponding protrusions may be formed in the insulator 33, and the insulator 33 may be fusion-bonded to the protrusions and the grooves of the vent plate 32 and the middle plate 38.

Since the vent plate 32 and the middle plate 38 are fusion-bonded through the insulator 33, a bent structure of the vent plate 32 is removed, thereby lowering a height of the current interrupting device in the cap assembly 30.

In addition, since the protrusions and the grooves of the vent plate 32 and the middle plate 38 are fusion-bonded to the corresponding grooves and the corresponding protrusions of the insulator 33, the vent plate 32 and the middle plate 38 are prevented from rotating with respect to each other in addition to enhancing fastening strength therebetween.

For convenience, the first embodiment is provided with a first protrusion P1 and a first groove G1 in the vent plate 32 and a second protrusion P2 and a second groove G2 in the middle plate 38, such that the insulator 33 is fusion-bonded to both the vent plate 32 and the middle plate 38.

Although not illustrated, the first protrusion and the first groove may be provided only in the vent plate, and the second protrusion and the second groove may be provided only in the middle plate, such that the insulator may be fusion-bonded at one side while being flatly fusion-bonded at the other side.

Thus, the insulator 33 is provided with a first corresponding groove CG1 and a first corresponding protrusion CP1 at one side such that they are correspondingly fusion-bonded to the first protrusion P1 and the first groove G1, and is provided with a second corresponding groove CG2 and a second corresponding protrusion CP2 at the other side such that they are correspondingly fusion-bonded to the second protrusion P2 and the second groove G2.

Although not illustrated, when provided with the first protrusion and the first groove only in the vent plate, the insulator may be correspondingly provided with the first corresponding groove and the first corresponding protrusion to be fusion-bonded, and when provided with the second protrusion and the second groove only in the vent plate, the insulator may be correspondingly provided with the second corresponding groove and the second corresponding protrusion to be fusion-bonded.

In more detail, the vent plate 32 is provided with the pair of first protrusions P1 and is correspondingly provided with the first grooves G1 adjacent to the first protrusions P1.

The middle plate 38 is provided with the pair of second protrusions P2 and is correspondingly provided with the second grooves G2 adjacent to the second protrusions P2.

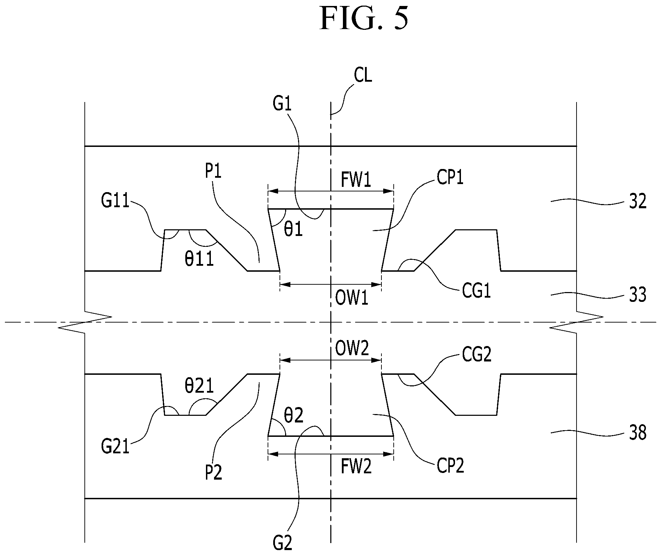

FIG. 5 is an enlarged view of a portion combined with the insulator of FIG. 4.

Referring to FIGS. 4 and 5, in a diametrical direction of the cap assembly 30, a first angle θ1 formed between a bottom surface of the first groove G1 of the vent plate 32 and one side surface of the first protrusion P1 of the vent plate 32 connected thereto is acute.

In addition, a second angle θ2 formed between a bottom surface of the second groove G2 of the middle plate 38 and one side surface of the second protrusion P2 of the middle plate 38 connected thereto is acute.

The first and second angles θ1 and θ2 may be formed to be equal to or different from each other.

That is, a first groove bottom width FW1 set by the bottom surface of the first groove G1 that is formed in the vent plate 31 is greater than a first groove opening width OW1 set between end portions of the first protrusions P1 that are connected to the bottom surface to face each other.

In addition, a second groove bottom width FW2 set by the bottom surface of the second groove G2 that is formed in the middle plate 38 is greater than a second groove opening width OW2 set between end portions of the second protrusions P2 that are connected to the bottom surface to face each other.

The insulator 33 is formed with a pair of the first corresponding grooves CG1 correspondingly combined to the first protrusion P1 of the vent plate 32, and is provided with the first corresponding protrusion CP1 correspondingly fusion-bonded between the pair of the first corresponding grooves CG1 to the first groove G1 that has the first groove bottom width FW1 and the first groove opening width OW1.

Thus, the insulator 33 and the vent plate 32 may mutually have high fastening strength therebetween in a vertical direction of FIG. 5, and may be prevented from rotating with respect to each other.

In addition, the insulator 33 is formed with a pair of the second corresponding grooves CG2 correspondingly combined to the second protrusion P2 of the middle plate 38, and is provided with the second corresponding protrusion CP2 correspondingly fusion-bonded between the pair of the second corresponding grooves CG2 to the second groove G2 that has the second groove bottom width FW2 and the second groove opening width OW2.

Thus, the insulator 33 and the middle plate 38 may mutually have high fastening strength therebetween in the vertical direction of FIG. 5, and may be prevented from rotating with respect to each other.

The pair of the first protrusions P1 formed in the vent plate are symmetrical to each other based on a center line CL of the first groove G1 of the vent plate 32.

The pair of the first protrusions P1 formed in the middle plate 38 are symmetrically formed based on a center line CL of the second groove G2 of the middle plate 38.

The first angle θ1 of the first protrusion P1 of the vent plate 32 is acute, and an eleventh angle θ11 formed between the other side surface of the first protrusion P1 and a bottom surface of an eleventh groove G11 is obtuse.

The second angle θ2 of the second protrusion P2 of the middle plate 38 is acute, and a twenty-first angle θ21 formed between the other side surface of the first protrusion P2 and a bottom surface of a twenty-first groove G21 is obtuse.

The eleventh and twenty-first angles θ11 and θ21 may be equal to or different from each other.

The insulator 33 is firstly fusion-bonded to be combined to the vent plate 32 with respect to the first and eleventh grooves G1 and G11 and the first and eleventh angles θ1 and θ11 of the first protrusion P1, and is secondly fusion-bonded to be combined to the middle plate 38 with respect to the second and twenty-first grooves G1 and G11 and the second and twenty-first angles θ2 and θ21 of the second protrusion P2.

The eleventh angle θ11 increases a fusion-bonded area between the insulator 33 and the vent plate 32 and enhances the fastening strength therebetween, and the twenty-first angle θ21 increases a fusion-bonded area between the insulator 33 and the middle plate 33 and enhances the fastening strength therebetween.

Although not illustrated, the insulator may be firstly or secondly fusion-bonded to be combined at one side while being flatly fusion-bonded at the other side.

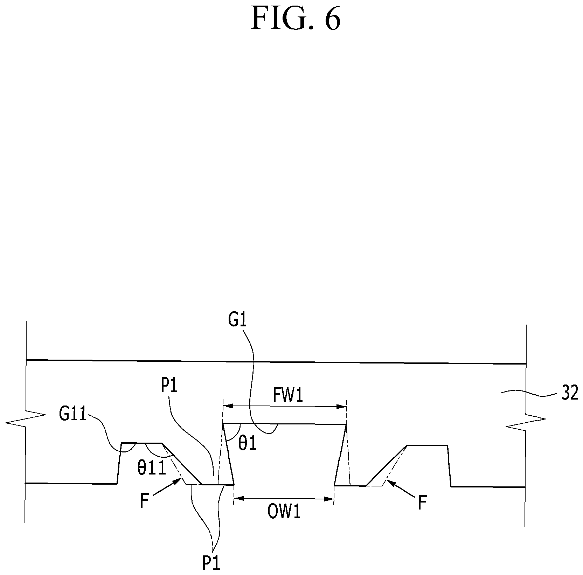

FIG. 6 is an enlarged view of a portion of the vent plate of FIG. 5 combined with the insulator before and after it is deformed.

The same forming method is used to form the first protrusion P1 and the first and eleventh grooves G1 and G11 in the vent plat 32 and the second protrusion P2 and the second and twenty-first grooves G2 and G21 in the middle plate 38.

Thus, for convenience, a forming method of the first protrusion P1 and the first and eleventh grooves G1 and G11 in the vent plate 32 will now be described with reference to FIG. 6.

That is, in first processing, the first protrusion P1 of the vent plate 32 is produced in an imaginary line state.

In second processing, an impact F is delivered to the first protrusion P1 in an arrow direction to deform the first protrusion P1 and the first and eleventh angles θ1 and θ11 in a solid line state.

That is, in the vent plate 32, the first groove G1 is set by the first groove bottom width FW1 and the first groove opening width OW1.

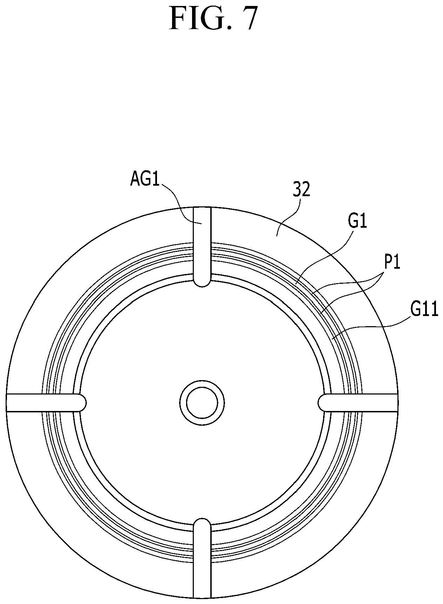

FIG. 7 is a bottom surface view of the vent plate of FIG. 3.

Referring to FIGS. 4 and 7, the vent plate 32 and the middle plate 38 may be provided with air discharging grooves AG1 and AG2 at surfaces facing the insulator 33.

The air discharging grooves AG1 and AG2 may be formed in the vent plate 32 and in the middle plate 38 in the same structure.

Thus, for convenience, FIG. 7 exemplarily illustrates the air discharging grooves AG1.

When the vent plate 32 and the insulator 33 are fusion-bonded, remaining air at the first and the eleventh grooves G1 and G11 between the first protrusions P1 of the vent plate 32 is discharged through the air discharging grooves AG1.

Thus, the vent plate 32 and the insulator 33 can be strongly fusion-bonded.

Referring to FIG. 7, the air discharging grooves AG1 formed in the vent plate 32 may be formed in a diametrical direction of the insulator 33, and may be spaced apart from each other in a circumferential direction.

Although not illustrated, the air discharging grooves AG2 formed in the middle plate 38 may be formed to correspond to the air discharging grooves AG1 formed in the vent plate 32.

Referring back to FIG. 4, the insulator 33 includes a first polyethylene layer 331 formed in the vent plate 32, a second polyethylene layer 332 formed in the middle plate 38, and a poly(butylene terephthalate) fiber layer 333 that is integrally formed between the first polyethylene layer 331 and the second polyethylene layer 332.

The first polyethylene layer 331 secures a fusion-bonding strength with the vent plate 32, the second polyethylene layer 332 secures fusion-bonding strength with the middle plate 38, and the poly(butylene terephthalate) fiber layer 333 provides durability of the insulator 33 between the first and second polyethylene layers 331 and 332.

Hereinafter, a second embodiment of the present invention will be described. Compared with the configurations of the first embodiment, a description of the same configurations will be omitted while different configurations will be described.

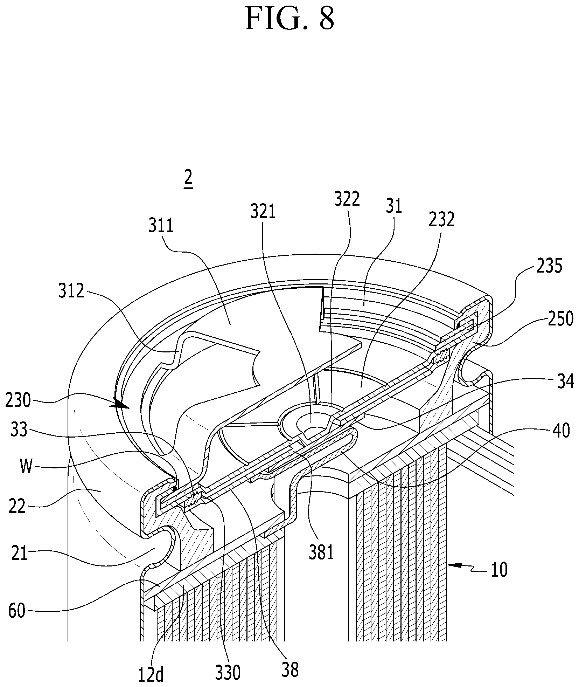

FIG. 8 is a partial cross-sectional perspective view of a rechargeable battery according to a second embodiment of the present invention.

Referring to FIG. 8, in a rechargeable battery 2 of the second embodiment, an insulating member 235 is interposed between the cap plate 31 and a vent plate 232, such that an end portion of the vent plate 232 is bent in a side opposite to the insulator 33 to be welded and electrically connected to a top surface of the cap plate 31.

A gasket 250 continuously encloses the vent plate 232 at an outer side of the insulator 33 from below, above, and a lateral side.

That is, a welding portion W of the vent plate 232 and the cap plate 31 is coated with the gasket 250 such that it is effectively prevented from being corroded.

Since the vent plate 232 encloses an outer side of the electrode assembly 230 and is welded to the top surface of the cap plate 31, the rechargeable battery of the second embodiment can be effectively used in an environment vulnerable to vibrations.

While this invention has been described in connection with what is presently considered to be practical embodiments thereof, it is to be understood that the invention is not limited to the disclosed embodiments, but, on the contrary, is intended to cover various modifications and equivalent arrangements included within the scope of the appended claims.

## Claims

1. A rechargeable battery (1) comprising:
an electrode assembly (10) through which charging and discharging operations are performed;
a case (20) accommodating the electrode assembly and electrically connected to a first electrode (11) of the electrode assembly; and
a cap assembly (30) connected to an opening of the case via a gasket (50) and being electrically connected to a second electrode (12) of the electrode assembly, wherein the cap assembly includes:
a vent plate (32) electrically connected to a cap plate (31);
a middle plate (38) electrically connected to the second electrode (12), the said middle plate being separated from the vent plate and comprising a through hole (381);
a vent (321) protruding from the vent plate (32) and into the through hole (381);
an insulator (33) interposed between the vent plate (32) and the middle plate (38); and
a sub-plate (34) electrically connecting the vent with the middle plate;
**characterized in that** protrusions and grooves (G1, P1, G2, P2) facing the insulator (33) are formed in at least one of the vent plate (32) and the middle plate (38) such that they are correspondingly combined with corresponding grooves and corresponding protrusions (CG1, CP1, CG2, CP2) of the insulator (33);
and **in that** the insulator (33) includes a first polyethylene layer (331) formed in the vent plate (32), a second polyethylene layer (332) formed in the middle plate (38), and a poly(butylene terephthalate) fiber layer (333) integrally formed between the first and second polyethylene layers.

2. A rechargeable battery according to claim 1, wherein the protrusions and the grooves of the insulator (33) are fusion-bonded to the corresponding grooves and the corresponding protrusions.

3. A rechargeable battery according to claim 1 or 2, wherein the vent plate (32) is provided with a pair of the said protrusions (P1), and the insulator (33) is correspondingly provided with a pair of the said grooves (CG1) adjacent thereto.

4. A rechargeable battery according to any preceding claim, wherein the middle plate (38) is provided with a pair of the said protrusions (P2), and the insulator (33) is correspondingly provided with a pair of the said grooves (CG2) adjacent thereto.

5. A rechargeable battery according to any preceding claim, wherein the protrusions and the grooves include a first protrusion (P1) and a first groove (G1) that are formed in the vent plate (32), and a second protrusion (P2) and a second groove (G2) that are formed in the middle plate (38), wherein the first protrusion and the first groove are symmetrical with respect to the second protrusion and the second groove in a stacking direction.

6. A rechargeable battery according to claim 5, wherein an angle (θ1, θ2) formed between bottom surfaces of the first and second grooves (G1, G2) of the vent (32) and middle plates (38) and one side surface of the first and second protrusions (P1, P2) of the vent and middle plates connected thereto is acute.

7. A rechargeable battery according to claim 5 or 6, comprising a pair of said first protrusions (P1) with a said first groove (G1) in between and a pair of said second protrusions (P2) with a said second groove (G2) in between, wherein each said groove has a bottom, sides and opening defined by the protrusions situated on either side thereof and the width (FW1, FW2) of the bottom is greater than the width (OW1, OW2) of the opening.

8. A rechargeable battery according to claim 7, wherein the insulator (33) is formed with first and second said corresponding grooves (CG1, CG2) that are correspondingly combined with the first protrusions (P1) and the second protrusions (P2), and is provided with first and second said corresponding protrusions (CP1, CP2) that are correspondingly combined with the first and second grooves (G1, G2).

9. A rechargeable battery according to claim 7 or 8, wherein the pair of first protrusions (P1) and the pair of second protrusions (P2) are symmetrically formed based on center lines (CL) of the first and second grooves (G1, G2) of the vent and middle plates, in a diametrical direction, an angle (θ1, θ2) formed between one side surface of the first and second protrusions (P1, P2) and bottom surfaces of the first and second grooves (G1, G2) connected thereto is acute, and an angle (θ11, θ21) formed between the other side surface of the first and second protrusions (P2) and the other bottom surfaces (G11, G21) of the first and second grooves connected thereto is obtuse.

10. A rechargeable battery according to claim 9, wherein the insulator (33) is formed by at least one of first fusion-bonding to the first groove (G1) and the first protrusion (P1) of the vent plate (32) at one side and a second fusion-bonding to the second groove (G2) and the second protrusion (P2) of the middle plate (38) at the other side.

11. A rechargeable battery according to any preceding claim, wherein the cap assembly (30) further includes a positive temperature coefficient (PTC) element (35) interposed between the cap plate (31) and the vent plate (32).

12. A rechargeable battery according to any preceding claim, wherein at least one of the vent plate (32) and the middle plate (38) is provided with an air discharging groove on a surface facing the insulator (33).

13. A rechargeable battery according to claim 12, comprising a plurality of the said air discharging grooves formed in a diametrical direction of the insulator (33) and separated from each other in a circumferential direction.

14. The rechargeable battery according to any preceding claim, wherein the middle plate (38) is connected to the second electrode (12) through a lead tab.

15. The rechargeable battery according to any preceding claim, wherein an end portion of the vent plate (32) is bent in a direction away from the insulator (33) and is electrically connected to a top surface of the cap plate (31).

16. A rechargeable battery according to claim 15, wherein the gasket (50) continuously encloses the vent plate (32) from below, above, and a lateral side thereof at an outer side of the insulator (33).

## Patentansprüche

1. Wiederaufladbare Batterie (1), umfassend:
eine Elektrodenanordnung (10), über die Lade- und Entladevorgänge durchgeführt werden;
ein Gehäuse (20), das die Elektrodenanordnung aufnimmt und elektrisch mit einer ersten Elektrode (11) der Elektrodenanordnung verbunden ist; und
eine Deckelanordnung (30), die über eine Dichtung (50) mit einer Öffnung des Gehäuses verbunden ist und elektrisch mit einer zweiten Elektrode (12) der Elektrodenanordnung verbunden ist, wobei die Deckelanordnung umfasst:
eine Lüftungsplatte (32), die elektrisch mit einer Deckelplatte (31) verbunden ist;
eine Mittelplatte (38), die elektrisch mit der zweiten Elektrode (12) verbunden ist, wobei die Mittelplatte von der Lüftungsplatte getrennt ist und ein Durchgangsloch (381) umfasst;
eine Lüftungsöffnung (321), die von der Lüftungsplatte (32) und in das Durchgangsloch (381) hinein vorsteht;
einen Isolator (33), der zwischen der Lüftungsplatte (32) und der Mittelplatte (38) angeordnet ist; und
eine Teilplatte (34), welche die Lüftungsöffnung elektrisch mit der Mittelplatte verbindet;
**dadurch gekennzeichnet, dass** in der Lüftungsplatte (32) oder/und der Mittelplatte (38) dem Isolator (33) zugewandte Vorsprünge und Nuten (G1, P1, G2, P2) derart ausgebildet sind, dass sie entsprechend mit entsprechenden Nuten und entsprechenden Vorsprüngen (CG1, CP1, CG2, CP2) des Isolators (33) kombiniert sind;
und dadurch, dass der Isolator (33) eine erste Polyethylenschicht (331), die in der Lüftungsplatte (32) ausgebildet ist, eine zweite Polyethylenschicht (332), die in der Mittelplatte (38) ausgebildet ist, und eine Poly(butylenterephthalat)-Faserschicht (333), die einstückig zwischen der ersten und zweiten Polyethylenschicht ausgebildet ist, umfasst.

2. Wiederaufladbare Batterie nach Anspruch 1, wobei die Vorsprünge und die Nuten des Isolators (33) mit den entsprechenden Nuten und den entsprechenden Vorsprüngen schmelzverbunden sind.

3. Wiederaufladbare Batterie nach Anspruch 1 oder 2, wobei die Lüftungsplatte (32) mit einem Paar der Vorsprünge (P1) versehen ist und der Isolator (33) benachbart dazu entsprechend mit einem Paar der Nuten (CG1) versehen ist.

4. Wiederaufladbare Batterie nach einem vorangehenden Anspruch, wobei die Mittelplatte (38) mit einem Paar der Vorsprünge (P2) versehen ist und der Isolator (33) benachbart dazu entsprechend mit einem Paar der Nuten (CG2) versehen ist.

5. Wiederaufladbare Batterie nach einem vorangehenden Anspruch, wobei die Vorsprünge und die Nuten einen ersten Vorsprung (P1) und eine erste Nut (G1) umfassen, die in der Lüftungsplatte (32) ausgebildet sind, und einen zweiten Vorsprung (P2) und eine zweite Nut (G2) umfassen, die in der Mittelplatte (38) ausgebildet sind, wobei der erste Vorsprung und die erste Nut bezogen auf den zweiten Vorsprung und die zweite Nut in einer Schichtungsrichtung symmetrisch sind.

6. Wiederaufladbare Batterie nach Anspruch 5, wobei ein Winkel (θ1, θ2), der zwischen Bodenflächen der ersten und zweiten Nut (G1, G2) der Lüftungs- (32) und Mittelplatte (38) und einer Seitenfläche des ersten und zweiten Vorsprungs (P1, P2) der Lüftungs- und Mittelplatte, die damit verbunden sind, ausgebildet ist, spitz ist.

7. Wiederaufladbare Batterie nach Anspruch 5 oder 6, die ein Paar der ersten Vorsprünge (P1) mit einer ersten Nut (G1) dazwischen und ein Paar der zweiten Vorsprünge (P2) mit einer zweiten Nut (G2) dazwischen umfasst, wobei jede Nut einen Boden, Seiten und eine Öffnung, die durch die auf beiden Seiten derselben befindlichen Vorsprünge definiert sind, aufweist und die Breite (FW1, FW2) des Bodens größer ist als die Breite (OW1, OW2) der Öffnung.

8. Wiederaufladbare Batterie nach Anspruch 7, wobei der Isolator (33) mit ersten und zweiten entsprechenden Nuten (CG1, CG2) ausgebildet ist, die entsprechend mit den ersten Vorsprüngen (P1) und den zweiten Vorsprüngen (P2) kombiniert sind, und mit ersten und zweiten entsprechenden Vorsprüngen (CP1, CP2) versehen ist, die entsprechend mit den ersten und zweiten Nuten (G1, G2) kombiniert sind.

9. Wiederaufladbare Batterie nach Anspruch 7 oder 8, wobei das Paar erster Vorsprünge (P1) und das Paar zweiter Vorsprünge (P2) in einer Durchmesserrichtung, basierend auf Mittellinien (CL) der ersten und zweiten Nuten (G1, G2) der Lüftungs- und Mittelplatte, symmetrisch ausgebildet sind, ein Winkel (θ1, θ2), der zwischen einer Seitenfläche der ersten und zweiten Vorsprünge (P1, P2) und Bodenflächen der ersten und zweiten Nuten (G1, G2), die damit verbunden sind, spitz ist und ein Winkel (θ11, θ21), der zwischen der anderen Seitenfläche der ersten und zweiten Vorsprünge (P2) und den anderen Bodenflächen (G11, G21) der ersten und zweiten Nuten, die damit verbunden sind, ausgebildet ist, stumpf ist.

10. Wiederaufladbare Batterie nach Anspruch 9, wobei der Isolator (33) durch ein erstes Schmelzverbinden mit der ersten Nut (G1) und dem ersten Vorsprung (P1) der Lüftungsplatte (32) auf einer Seite oder/und ein zweites Schmelzverbinden mit der zweiten Nut (G2) und dem zweiten Vorsprung (P2) der Mittelplatte (38) auf der anderen Seite ausgebildet ist.

11. Wiederaufladbare Batterie nach einem vorangehenden Anspruch, wobei die Deckelanordnung (30) ferner ein Element (35) mit positivem Temperaturkoeffizienten (*positive temperature coefficient* - PTC) umfasst, das zwischen der Deckelplatte (31) und der Lüftungsplatte (32) angeordnet ist.

12. Wiederaufladbare Batterie nach einem vorangehenden Anspruch, wobei die Lüftungsplatte (32) oder/und die Mittelplatte (38) auf einer dem Isolator (33) zugewandten Oberfläche mit einer Luftauslassnut versehen ist/sind.

13. Wiederaufladbare Batterie nach Anspruch 12, die eine Mehrzahl der Luftauslassnuten umfasst, die in einer Durchmesserrichtung des Isolators (33) ausgebildet und in einer Umfangsrichtung voneinander getrennt sind.

14. Wiederaufladbare Batterie nach einem vorangehenden Anspruch, wobei die Mittelplatte (38) über einen Leitungsstreifen mit der zweiten Elektrode (12) verbunden ist.

15. Wiederaufladbare Batterie nach einem vorangehenden Anspruch, wobei ein Endabschnitt der Lüftungsplatte (32) in einer Richtung weg von dem Isolator (33) gebogen ist und elektrisch mit einer oberen Oberfläche der Deckelplatte (31) verbunden ist.

16. Wiederaufladbare Batterie nach Anspruch 15, wobei die Dichtung (50) die Lüftungsplatte (32) auf einer Außenseite des Isolators (33) durchgehend von unten, oben und einer seitlichen Seite derselben her umschließt.

## Revendications

1. Batterie rechargeable (1) comprenant :
un ensemble d'électrodes (10) à travers lequel des opérations de charge et de décharge sont effectuées ;
un boîtier (20) recevant l'ensemble d'électrodes et électriquement relié à une première électrode (11) de l'ensemble d'électrodes ; et
un ensemble de capuchon (30) relié à une ouverture du boîtier par l'intermédiaire d'un joint d'étanchéité (50) et étant électriquement relié à une deuxième électrode (12) de l'ensemble d'électrodes, où l'ensemble de capuchon comporte :
une plaque à évent (32) électriquement reliée à une plaque de capuchon (31) ;
une plaque intermédiaire (38) électriquement reliée à la deuxième électrode (12), ladite plaque intermédiaire étant séparée de la plaque à évent et comprenant un trou traversant (381) ;
un évent (321) faisant saillie à partir de la plaque à évent (32) et dans le trou traversant (381) ;
un isolateur (33) interposé entre la plaque à évent (32) et la plaque intermédiaire (38) ; et
une sous-plaque (34) reliant électriquement l'évent à la plaque intermédiaire ;
**caractérisée en ce que** des saillies et des rainures (G1, P1, G2, P2) faisant face à l'isolateur (33) sont formées dans au moins l'une de la plaque à évent (32) et de la plaque intermédiaire (38) de sorte qu'elles soient combinées de manière correspondante avec des rainures correspondantes et des saillies correspondantes (CG1, CP1, CG2, CP2) de l'isolateur (33) ;
et **en ce que** l'isolateur (33) comporte une première couche de polyéthylène (331) formée dans la plaque à évent (32), une deuxième couche de polyéthylène (332) formée dans la plaque intermédiaire (38), et une couche de fibres de poly(téréphtalate de butylène) (333) formée d'un seul tenant entre les première et deuxième couches de polyéthylène.

2. Batterie rechargeable selon la revendication 1, dans laquelle les saillies et les rainures de l'isolateur (33) sont liées par fusion aux rainures correspondantes et aux saillies correspondantes.

3. Batterie rechargeable selon la revendication 1 ou 2, dans laquelle la plaque à évent (32) est pourvue d'une paire desdites saillies (P1), et l'isolateur (33) est pourvu de manière correspondante d'une paire desdites rainures (CG1) adjacentes à celles-ci.

4. Batterie rechargeable selon l'une des revendications précédentes, dans laquelle la plaque intermédiaire (38) est pourvue d'une paire desdites saillies (P2), et l'isolateur (33) est pourvu de manière correspondante d'une paire desdites rainures (CG2) adjacentes à celles-ci.

5. Batterie rechargeable selon l'une des revendications précédentes, dans laquelle les saillies et les rainures comportent une première saillie (P1) et une première rainure (G1) qui sont formées dans la plaque à évent (32), et une deuxième saillie (P2) et une deuxième rainure (G2) qui sont formées dans la plaque intermédiaire (38), où la première saillie et la première rainure sont symétriques par rapport à la deuxième saillie et à la deuxième rainure dans une direction d'empilement.

6. Batterie rechargeable selon la revendication 5, dans laquelle un angle (θ1, θ2) formé entre des surfaces inférieures des première et deuxième rainures (G1, G2) de l'évent (32) et des plaques intermédiaires (38) et une surface latérale des première et deuxième saillies (P1, P2) de l'évent et des plaques intermédiaires reliée à celles-ci est aigu.

7. Batterie rechargeable selon la revendication 5 ou 6, comprenant une paire desdites premières saillies (P1) avec ladite première rainure (G1) entre elles et une paire desdites deuxièmes saillies (P2) avec ladite deuxième rainure (G2) entre elles, où chacune desdites rainures a un fond, des côtés et une ouverture définis par les saillies situées de chaque côté de celle-ci et la largeur (FW1, FW2) du fond est supérieure à la largeur (OW1, OW2) de l'ouverture.

8. Batterie rechargeable selon la revendication 7, dans laquelle l'isolateur (33) est formé desdites première et deuxième rainures correspondantes (CG1, CG2) qui sont combinées de manière correspondante avec les premières saillies (P1) et les deuxièmes saillies (P2), et est pourvu desdites première et deuxième saillies correspondantes (CP1, CP2) qui sont combinées de manière correspondante avec les première et deuxième rainures (G1, G2).

9. Batterie rechargeable selon la revendication 7 ou 8, dans laquelle la paire de premières saillies (P1) et la paire de deuxièmes saillies (P2) sont formées symétriquement par rapport à des lignes centrales (CL) des première et deuxième rainures (G1, G2) de l'évent et des plaques intermédiaires, dans une direction diamétrale, un angle (θ1, θ2) formé entre une surface latérale des première et deuxième saillies (P1, P2) et des surfaces inférieures des première et deuxième rainures (G1, G2) reliées à celle-ci est aigu, et un angle (θ11, θ21) formé entre l'autre surface latérale des première et deuxième saillies (P2) et les autres surfaces inférieures (G11, G21) des première et deuxième rainures reliées à celle-ci est obtus.

10. Batterie rechargeable selon la revendication 9, dans laquelle l'isolateur (33) est formé par au moins l'une parmi une première liaison par fusion à la première rainure (G1) et à la première saillie (P1) de la plaque à évent (32) au niveau d'un côté et une deuxième liaison par fusion à la deuxième rainure (G2) et à la deuxième saillie (P2) de la plaque intermédiaire (38) au niveau de l'autre côté.

11. Batterie rechargeable selon l'une des revendications précédentes, dans laquelle l'ensemble de capuchon (30) comporte en outre un élément à coefficient de température positif (PTC) (35) interposé entre la plaque de capuchon (31) et la plaque à évent (32).

12. Batterie rechargeable selon l'une des revendications précédentes, dans laquelle au moins l'une de la plaque à évent (32) et de la plaque intermédiaire (38) est pourvue d'une rainure d'évacuation d'air sur une surface faisant face à l'isolateur (33).

13. Batterie rechargeable selon la revendication 12, comprenant une pluralité desdites rainures d'évacuation d'air formées dans une direction diamétrale de l'isolateur (33) et séparées les unes des autres dans une direction circonférentielle.

14. Batterie rechargeable selon l'une des revendications précédentes, dans laquelle la plaque intermédiaire (38) est reliée à la deuxième électrode (12) par l'intermédiaire d'une patte de connexion.

15. Batterie rechargeable selon l'une des revendications précédentes, dans laquelle une partie d'extrémité de la plaque à évent (32) est pliée dans une direction s'éloignant de l'isolateur (33) et est électriquement reliée à une surface supérieure de la plaque de capuchon (31).

16. Batterie rechargeable selon la revendication 15, dans laquelle le joint d'étanchéité (50) entoure en continu la plaque à évent (32) par dessous, par dessus, et depuis un côté latéral de celle-ci au niveau d'un côté externe de l'isolateur (33).
